# EUROPEAN PATENT SPECIFICATION

(11) **EP 3 960 288 B1**
(45) Date of publication and mention of the grant of the patent: **25.09.2024**
(21) Application number: 21198894.4
(22) Date of filing: 27.01.2012
(51) Int. Cl.: B01J 35/00, H01M 8/10, H01M 4/92, H01M 4/90, B01J 23/46, B01J 23/847, B01J 23/48, B01J 23/40, B01J 21/06, B01J 23/85

(54) **CATALYSED MEMBRANE**
KATALYSIERTE MEMBRAN
MEMBRANE CATALYSÉE

(30) Priority: 08.02.2011 GB 201102138
(43) Date of publication of application: 02.03.2022
(62) Divisional of application: 17153353.2
(73) Proprietor: Johnson Matthey Hydrogen Technologies Limited, London EC4A 4AB (GB)
(72) Inventor: SHARMAN, Jonathan David Brereton, Reading, RG4 9NH (GB); THEOBALD, Brian Ronald Charles, Reading, RG4 9NH (GB); WRIGHT, Edward Anthony, Reading, RG4 9NH (GB)
(74) Representative: Johnson Matthey Plc

(56) References cited:
- WO-A2-01/15247

## Description

The present invention relates to a catalysed membrane, particularly for use at the anode in a proton exchange membrane fuel cell that experiences high electrochemical potentials.

A fuel cell is an electrochemical cell comprising two electrodes separated by an electrolyte. A fuel, such as hydrogen or an alcohol such as methanol or ethanol, is supplied to the anode and an oxidant, such as oxygen or air, is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of oxygen at the cathode.

In proton exchange membrane (PEM) fuel cells, the electrolyte is a solid polymeric membrane. The membrane is electronically insulating but proton conducting, and protons, produced at the anode, are transported across the membrane to the cathode, where they combine with oxygen to form water.

The principle component of a PEM fuel cell is known as a membrane electrode assembly (MEA) and is essentially composed of five layers. The central layer is the polymer ion-conducting membrane. On either side of the ion-conducting membrane there is an electrocatalyst layer, containing an electrocatalyst designed for the specific electrochemical reaction. Finally, adjacent to each electrocatalyst layer there is a gas diffusion layer. The gas diffusion layer must allow the reactants to reach the electrocatalyst layer and must conduct the electric current that is generated by the electrochemical reactions. Therefore the gas diffusion layer must be porous and electrically conducting.

Electrocatalysts for fuel oxidation and oxygen reduction are typically based on platinum or platinum alloyed with one or more other metals. The platinum or platinum alloy catalyst can be in the form of unsupported nanometre sized particles (such as metal blacks or other unsupported particulate metal powders) or can be deposited as even higher surface area particles onto a conductive carbon substrate, or other conductive material (a supported catalyst).

The MEA can be constructed by several methods. The electrocatalyst layer may be applied to the gas diffusion layer to form a gas diffusion electrode. Two gas diffusion electrodes can be placed either side of an ion-conducting membrane and laminated together to form the five-layer MEA. Alternatively, the electrocatalyst layer may be applied to both faces of the ion-conducting membrane to form a catalyst coated ion-conducting membrane. Subsequently, gas diffusion layers are applied to both faces of the catalyst coated ion-conducting membrane. Finally, an MEA can be formed from an ion-conducting membrane coated on one side with an electrocatalyst layer, a gas diffusion layer adjacent to that electrocatalyst layer, and a gas diffusion electrode on the other side of the ion-conducting membrane.

Typically tens or hundreds of ME As are required to provide enough power for most applications, so multiple MEAs are assembled to make up a fuel cell stack. Field flow plates are used to separate the MEAs. The plates perform several functions: supplying the reactants to the MEAs, removing products, providing electrical connections and providing physical support.

High electrochemical potentials can occur in a number of real-life operational situations and in certain circumstances can cause damage to the catalyst layer/electrode structure. Further description of a situation where high electrochemical potentials are seen is described below:
Electrochemical cells occasionally are subjected to a voltage reversal condition, which is a situation where the cell is forced to the opposite polarity. Fuel cells in series are potentially subject to these unwanted voltage reversals, such as when one of the cells is forced to the opposite polarity by the other cells in the series. In fuel cell stacks, this can occur when a cell is unable to produce, from the fuel cell reactions, the current being forced through it by the rest of the cells. Group of cells within a stack can also undergo voltage reversal and even entire stacks can be driven into voltage reversal by other stacks in an array. Aside from the loss of power associated with one or more cells going into voltage reversal, this situation poses reliability concerns. Undesirable electrochemical reactions may occur, which may detrimentally affect fuel cell components. Component degradation reduces the reliability and performance of the fuel cell, and in turn, its associated stack and array.

A number of approaches have been utilised to address the problem of voltage reversal, for example employing diodes capable of carrying the current across each individual fuel cell or monitoring the voltage of each individual cell and shutting down an affected cell if a low voltage is detected. However, given that stacks typically employ numerous fuel cells, such approaches can be quite complex and expensive to implement.

Alternatively, other conditions associated with voltage reversal may be monitored instead, and appropriate corrective action can be taken if reversal conditions are detected. For instance, a specially constructed sensor cell may be employed that is more sensitive than other fuel cells in the stack to certain conditions leading to voltage reversal (for example, fuel starvation of the stack). Thus, instead of monitoring every cell in a stack, only the sensor cell need be monitored and used to prevent widespread cell voltage reversal under such conditions. However, other conditions leading to voltage reversal may exist that a sensor cell cannot detect (for example, a defective individual cell in the stack). Another approach is to employ exhaust gas monitors that detect voltage reversal by detecting the presence of or abnormal amounts of species in an exhaust gas of a fuel cell stack that originate from reactions that occur during reversal. While exhaust gas monitors can detect a reversal condition occurring within any cell in a stack and they may suggest the cause of reversal, such monitors do not identify specific problem cells and they do not generally provide any warning of an impending voltage reversal.

Instead of, or in combination with the preceding, a passive approach may be preferred such that, in the event that reversal does occur, the fuel cells are either more tolerant to the reversal or are controlled in such a way that degradation of any critical cell components is reduced. A passive approach may be particularly preferred if the conditions leading to reversal are temporary. If the cells can be made more tolerant to voltage reversal, it may not be necessary to detect for reversal and/or shut down the fuel cell system during a temporary reversal period. Thus, one method that has been identified for increasing tolerance to cell reversal is to employ a catalyst that is more resistant to oxidative corrosion than conventional catalysts (see WO01/059859).

A second method that has been identified for increasing tolerance to cell reversal is to incorporate an additional or second catalyst composition at the anode for purposes of electrolysing water (see WO01/15247). During voltage reversal, electrochemical reactions may occur that result in the degradation of certain components in the affected fuel cell. Depending on the reason for the voltage reversal, there can be a significant rise in the absolute potential of the fuel cell anode to a higher potential than that of the cathode. This occurs, for instance, when there is an inadequate supply of fuel (i.e. fuel starvation) to the anode. In this situation the cathode reaction and thus the cathode potential remains unchanged as the oxygen reduction reaction (ORR):

½ O₂ + 2H⁺ + 2e⁻ → H₂O

whereas the normal fuel cell reaction at the anode - the hydrogen oxidation reaction (HOR):

H₂ → 2H⁺ + 2e⁻

can no longer be sustained and other electrochemical reactions then take place at the anode to maintain the current. These reactions can typically be either water electrolysis - the oxygen evolution reaction (OER):

H₂O → ½ O₂ + 2H⁺ + 2e⁻

or carbon electrochemical oxidation:

½ C + H₂O → ½ CO₂ + 2H⁺ + 2e⁻

Both these reactions occur at a higher absolute potential than the oxygen reduction reaction at the cathode (hence the cell voltage reverses).

During such a reversal in a PEM fuel cell, water present at the anode enables the electrolysis reaction to proceed and the carbon support materials used to support the anode catalyst and other cell components enables the carbon oxidation reaction also to proceed. It is much more preferable to have water electrolysis occur rather than the carbon oxidation reaction. When water electrolysis reactions at the anode cannot consume the current forced through the cell, the rate of oxidation of the carbonaceous anode components increases, thereby tending to irreversibly degrade certain anode components at a greater rate. Thus, by incorporating a catalyst composition that promotes the electrolysis of water, more of the current forced through the cell may be consumed in the electrolysis of water than in the oxidation of anode components.

A reversal condition can also be experienced due to oxidant starvation on the cathode. However, this is much less detrimental to the cell, because the reaction likely to occur instead of the reduction of the oxidant is that the protons produced at the anode cross the electrolyte and combine with electrons directly at the cathode to produce hydrogen via the hydrogen evolution reaction (HER):

2H⁺ → 2e⁻ + H₂

In this reversal situation the anode reaction and thus the anode potential remain unchanged, but the absolute potential of the cathode drops to below that of the anode (hence the cell voltage reverses). These reactions do not involve potentials and reactions at which significant component degradation is caused.

Electrocatalysts for the water electrolysis reaction are generally based on ruthenium oxide or ruthenium oxide mixed with at least one other metal oxide. However, despite their good activity for the oxygen evolution reaction (OER), the stability of such catalysts is poor under certain practical operational modes of the fuel cell, particularly those where highly oxidative potentials are applied. A particular problem with Ru-containing anode catalyst layers in an MEA, is that under cell reversal or start-stop operational modes of the fuel cell, high potentials can occur at the anode, resulting in Ru dissolution and movement to the cathode, where Ru is a poison for the ORR and reduces the effectiveness of Pt for this reaction.

It is therefore an object of the present invention to provide a catalyst layer comprising HOR and OER catalysts, each of which has comparable activity to state of the art HOR and OER electrocatalysts, and when the catalyst layer is incorporated into an MEA, such MEA demonstrates improved fuel cell performance and durability when operated under practical real-life fuel cell operating conditions.

WO 01/15247 A2 discloses catalytic materials for use at the anode of reversal tolerant fuel cells. The catalysts comprise a first composition capable of generating protons, and a second composition for evolving oxygen from water.

Accordingly, the present invention provides a catalysed membrane comprising a solid polymeric proton conducting membrane and a catalyst layer deposited on one or both faces of the solid polymeric proton conducting membrane, the catalyst layer comprising: (i) a first catalytic material, wherein the first catalytic material facilitates a hydrogen oxidation reaction; and (ii) a second catalytic material, wherein the second catalytic material facilitates an oxygen evolution reaction, wherein the second catalytic material comprises iridium or iridium oxide and one or more metals M or an oxide thereof, wherein M is selected from the group consisting of transition metals and Sn, and wherein the first catalytic material comprises a primary metal which is platinum, characterized in that the first catalytic material is supported on the second catalytic material.

In one embodiment, all the first catalytic material is supported on the second catalytic material. In a second embodiment, some of the first catalytic material (for example up to 90%, suitably up to 70%, more suitably up to 50%, preferably up to 25% and more preferably up to 5%) is not supported on the second catalytic material and exists as discrete unsupported particles.

Suitably, M is selected from the group consisting of group IVB, VB and VIB metals and Sn; more suitably selected from the group consisting of Ti, Zr, Hf, Nb, Ta and Sn; preferably selected from the group consisting of Ti, Ta and Sn. In a preferred embodiment, M is not Ru.

The iridium or oxide thereof and the one or more metals (M) or oxide thereof may either exist as mixed metals or oxides or as partly or wholly alloyed materials or as a combination of the two or more. The extent of any alloying can be shown by x- ray diffraction (XRD).

The atomic ratio of iridium to (total) metal M in the second catalytic material is from 20:80 to 99: 1, suitably 30:70 to 99: 1 and preferably 60:40 to 99: 1.

Suitably, the second catalytic material has a surface area of at least 10 m²/g, more suitably at least 15 m²/g, and preferably at least 30 m²/g.

The second catalytic material may be of any form suitable for forming a porous catalyst layer, for example a particulate, an aerogel (foam-like), acicular, fibrous etc. If fibrous, the fibres are suitably less than 500nm in length, preferably less than 200nm and may be made by a variety of process, including electrospinning.

The primary metal may be alloyed or mixed with one or more other precious metals, or base metals or an oxide of a precious metal or base metal. Suitably, the weight ratio of the primary metal of the first catalytic material to the second catalytic material is 1 : 99 to 70:30, preferably 5:95 to 40:60.

The first catalytic material may be supported on the second catalytic material by adding the second catalytic material (suitably in solid form) to an acidic solution of a precursor of the first catalytic material, with rapid stirring. Stirring is continued for several days, after which the resulting slurry was collected by filtration, washed and air-dried at elevated temperature.

The catalyst layer of the invention has utility in a number of applications, but particularly as the catalyst layer at the anode of a fuel cell, in particular a proton exchange membrane fuel cell. In one preferred embodiment, the catalyst layer is used at the anode of a proton exchange membrane fuel cell which is subject to incidences of cell reversal during practical real-life operation. The catalyst layer may also show improved tolerance to anode performance degradation caused by the presence of low levels of carbon monoxide impurities in the hydrogen fuel supply, particularly when compared to a low surface area HOR electrocatalyst, such as unsupported platinum (e.g. platinum black).

In one embodiment of the invention, the catalyst layer comprises a third catalytic material wherein the third catalytic material may be the same or different to the first catalytic material and comprises a metal (primary metal) as defined hereinbefore for the first catalytic material. Suitably, the third catalytic material is unsupported. Suitably, the third catalytic material is the same as the first catalytic material. The third catalytic material may account for 0-50% of the total of the first catalytic material and the third catalytic material.

Suitably, the total loading of the primary metal of the first (and if present third) catalytic material in the catalyst layer is less than 0.5 mg/cm², and is preferably from 0.01 mg/cm² to 0.4 mg/cm², most preferably 0.02 mg/cm² to 0.2 mg/cm². The loading will depend on the use of the catalyst layer and suitable loadings will be known to those skilled in the art.

The catalyst layer may comprise additional components, such as an ionomer, suitably a proton conducting ionomer. Examples of suitable proton conducting ionomers will be known to those skilled in the art, but include perfluorosulphonic acid ionomers, such as Nafion^{®} and ionomers made from hydrocarbon polymers.

The catalyst layer of the invention has utility in PEM fuel cells. Accordingly, a further aspect of the invention provides an electrode, suitably an anode, comprising a gas diffusion layer (GDL) and a catalyst layer according to the invention.

The catalyst layer can be deposited onto a GDL using well known techniques, such as those disclosed in EP 0 731 520. The catalyst layer components may be formulated into an ink, comprising an aqueous and/or organic solvent, optional polymeric binders and optional proton-conducting polymer. The ink may be deposited onto an electronically conducting GDL using techniques such as spraying, printing and doctor blade methods. Typical GDLs are suitably based on conventional non-woven carbon fibre gas diffusion substrates such as rigid sheet carbon fibre papers (e.g. the TGP-H series of carbon fibre papers available from Toray Industries Inc., Japan) or roll-good carbon fibre papers (e.g. the H2315 based series available from Freudenberg FCCT KG, Germany; the Sigracet^{®} series available from SGL Technologies GmbH, Germany; the AvCarb^{®} series available from Ballard Material Products, United States of America; or the NOS series available from CeTech Co., Ltd. Taiwan), or on woven carbon fibre cloth substrates (e.g. the SCCG series of carbon cloths available from the SAATI Group, S.p.A., Italy; or the WOS series available from CeTech Co., Ltd, Taiwan). For many PEMFC and DMFC applications the non- woven carbon fibre paper, or woven carbon fibre cloth substrates are typically modified with a hydrophobic polymer treatment and/or application of a microporous layer comprising particulate material either embedded within the substrate or coated onto the planar faces, or a combination of both to form the gas diffusion layer. The particulate material is typically a mixture of carbon black and a polymer such as polytetrafluoroethylene (PTFE). Suitably the GDLs are between 100 and 400 µm thick. Preferably there is a layer of particulate material such as carbon black and PTFE on the face of the GDL that contacts the catalyst layer.

In PEM fuel cells, the electrolyte is a proton conducting membrane. The catalyst layer of the invention is deposited onto one or both faces of the proton conducting membrane to form a catalysed membrane. The catalyst layer can be deposited onto the membrane using well-known techniques. The catalyst layer components may be formulated into an ink and deposited onto the membrane either directly or indirectly via a transfer substrate.

The membrane may be any membrane suitable for use in a PEM fuel cell, for example the membrane may be based on a perfluorinated sulphonic acid material such as Nafion^{®} (DuPont), Flemion^{®} (Asahi Glass) and Aciplex^{®} (Asahi Kasei); these membranes may be used unmodified, or may be modified to improve the high temperature performance, for example by incorporating an additive. Alternatively, the membrane may be based on a sulphonated hydrocarbon membrane such as those available from FuMA-Tech GmbH as the fumapem^{®} P, E or K series of products, JSR Corporation, Toyobo Corporation, and others. The membrane may be a composite membrane, containing the proton-conducting material and other materials that confer properties such as mechanical strength. For example, the membrane may comprise an expanded PTFE substrate. Alternatively, the membrane may be based on polybenzimidazole doped with phosphoric acid and include membranes from developers such as BASF Fuel Cell GmbH, for example the Celtec^{®} -P membrane which will operate in the range 120°C to 180°C.

In a further embodiment of the invention, the substrate onto which the catalyst of the invention is applied is a transfer substrate. Accordingly, a further aspect of the present invention provides a catalysed transfer substrate comprising a catalyst layer of the invention. The transfer substrate may be any suitable transfer substrate known to those skilled in the art but is preferably a polymeric material such as polytetrafluoroethylene (PTFE), polyimide, polyvinylidene difluoride (PVDF), or polypropylene (especially biaxially-oriented polypropylene, BOPP) or a polymer-coated paper such as polyurethane coated paper. The transfer substrate could also be a silicone release paper or a metal foil such as aluminium foil. The catalyst layer of the invention may then be transferred to a GDL or membrane by techniques known to those skilled in the art.

A yet further aspect of the invention provides a membrane electrode assembly comprising a catalyst layer, electrode or catalysed membrane according to the invention. The MEA may be made up in a number of ways including, but not limited to:
(i) a proton conducting membrane may be sandwiched between two electrodes (one anode and one cathode), at least one of which is an electrode according to the present invention;
(ii) a catalysed membrane coated on one side only by a catalyst layer may be sandwiched between (a) a gas diffusion layer and an electrode, the gas diffusion layer contacting the side of the membrane coated with the catalyst layer, or (b) two electrodes, and wherein at least one of the catalyst layer and the electrode(s) is according to the present invention;
(iii) a catalysed membrane coated on both sides with a catalyst layer may be sandwiched between (a) two gas diffusion layers, (b) a gas diffusion layer and an electrode or (c) two electrodes, and wherein at least one of the catalyst layer and the electrode(s) is according to the present invention.

The MEA may further comprise components that seal and/or reinforce the edge regions of the MEA for example as described in WO2005/020356. The MEA is assembled by conventional methods known to those skilled in the art.

Electrochemical devices in which the catalyst layer, electrode, catalysed membrane and MEA of the invention may be used include fuel cells, in particular proton exchange membrane (PEM) fuel cells. The PEM fuel cell could be operating on hydrogen or a hydrogen-rich fuel at the anode or could be fuelled with a hydrocarbon fuel such as methanol. The catalyst layer, electrode, catalysed membrane and MEA of the invention may also be used in fuel cells in which the membranes use charge carriers other than protons, for example OH" conducting membranes such as those available from Solvay Solexis S.p.A., FuMA-Tech GmbH. The catalyst layer and electrode of the invention may also be used in other low temperature fuel cells that employ liquid ion conducting electrolytes, such as aqueous acids and alkaline solutions or concentrated phosphoric acid.

Accordingly, a further aspect of the invention provides a fuel cell, preferably a proton exchange membrane fuel cell, comprising a catalyst layer, an electrode, a catalysed membrane or an MEA of the invention.

The invention will now be further described by way of example only.

### Preparation of IrTa mixed oxide catalyst

IrCl₃ (76.28g, 0.21 mol Ir) was suspended in water (500ml) and stirred overnight. TaCl₅ (32.24g, 0.090 mol Ta) was added to concentrated hydrochloric acid (200ml) with stirring to give a slightly milky solution. The Ta solution was stirred into the IrCl₃ solution and kept until ready to use. The solution was spray dried and calcined in air to yield a 70at%lr 30at%Ta mixed oxide catalyst.

### Preparation of Pt/IrTa oxide catalyst

Hexachloroplatinic acid (H₂PtCl₆) solution containing 2.0 g of Pt was diluted to 500ml with water. Formic acid (60ml) was added to the Pt solution and stirred. To the resulting solution, IrTa Oxide (18.0g) was added with rapid stirring. Stirring was continued for 6 days. The slurry was collected by filtration, washed copiously with water and dried in air at 105°C. The product was ground in a mortar and pestle.
Yield: 19.4 g
Metal assay (wt%): Pt = 9.21%, Ir = 46.3%, Ta = 18.5%
CO metal area = 13.6 m²/g-Pt

XRD characterised as indicating a Pt and IrTa oxide phase; Pt crystallite size ~ 5.4nm, IrTa oxide phase crystallite size - 7.0 nm, lattice parameters a = 4.584 Å, c = 3.175 Å.

## Claims

1. A catalysed membrane comprising a solid polymeric proton conducting membrane and a catalyst layer deposited on one or both faces of the solid polymeric proton conducting membrane, the catalyst layer comprising:
(i) a first catalytic material, wherein the first catalytic material facilitates a hydrogen oxidation reaction; and
(ii) a second catalytic material, wherein the second catalytic material facilitates an oxygen evolution reaction, wherein the second catalytic material comprises iridium or iridium oxide and one or more metals M or an oxide thereof, wherein M is selected from the group consisting of transition metals and Sn, and
wherein the first catalytic material comprises a primary metal which is platinum,
**characterized in that** the first catalytic material is supported on the second catalytic material.

2. A catalysed membrane according to claim 1, wherein all the first catalytic material is supported on the second catalytic material.

3. A catalysed membrane according to claim 1 or claim 2, wherein M is selected from the group consisting of Group IVB, VB and VIB metals and Sn.

4. A catalysed membrane according to claim 3, wherein M is selected from the group consisting of Ti, Zr, Hf, Nb, Ta and Sn.

5. A catalysed membrane according to any preceding claim, wherein the second catalytic material has a surface area of at least 10 m²/g.

6. A catalysed membrane according to any preceding claims, wherein the second catalytic material is a particulate, an aerogel, acicular or fibrous.

7. A catalysed membrane according to any preceding claim, wherein the total loading of the primary metal of the first catalytic material is less than 0.5 mg/cm².

8. A catalysed membrane according to any preceding claim, wherein the total loading of the primary metal of the first catalytic material is from 0.01 to 0.4 mg/cm².

9. A catalysed membrane according to any preceding claim, wherein the weight ratio of the primary metal of the first catalytic material to the second catalytic material is 1:99 to 70:30.

10. A catalysed membrane according to any preceding claim, wherein the weight ratio of the primary metal of the first catalytic material to the second catalytic material is 5:95 to 40:60.

11. A catalysed membrane according to any preceding claim, wherein the catalyst layer comprises a proton conducting ionomer.

12. Use of a catalysed membrane according to any preceding claim for the electrolysis of water.

13. A membrane electrode assembly comprising a catalysed membrane as claimed in any of claims 1 to 12.

## Patentansprüche

1. Katalysierte Membran, umfassend eine feste, protonenleitende Polymermembran und eine auf einer oder beiden Flächen der festen, protonenleitenden Polymermembran aufgebrachte Katalysatorschicht, wobei die Katalysatorschicht umfasst:
(i) ein erstes katalytisches Material, wobei das erste katalytische Material eine Wasserstoffoxidationsreaktion fördert; und
(ii) ein zweites katalytisches Material, wobei das zweite katalytische Material eine Sauerstoffentwicklungsreaktion fördert, wobei das zweite katalytische Material Iridium oder Iridiumoxid und ein oder mehrere Metalle M oder ein Oxid davon umfasst, wobei M aus der Gruppe ausgewählt ist, bestehend aus Übergangsmetallen und Sn,
und
wobei das erste katalytische Material ein Primärmetall umfasst, bei dem es sich um Platin handelt, **dadurch gekennzeichnet, dass** das erste katalytische Material auf dem zweiten katalytischen Material getragen wird.

2. Katalysierte Membran nach Anspruch 1, wobei das sämtliche erste katalytische Material auf dem zweiten katalytischen Material getragen wird.

3. Katalysierte Membran nach Anspruch 1 oder 2, wobei M aus der Gruppe ausgewählt ist, bestehend aus der Gruppe von IVB-, VB- und VIB-Metallen und Sn.

4. Katalysierte Membran nach Anspruch 3, wobei M aus der Gruppe ausgewählt ist, bestehend aus Ti, Zr, Hf, Nb, Ta und Sn.

5. Katalysierte Membran nach einem der vorstehenden Ansprüche, wobei das zweite katalytische Material einen Oberflächenbereich von mindestens 10 m²/g aufweist.

6. Katalysierte Membran nach einem der vorstehenden Ansprüche, wobei das zweite katalytische Material ein Partikel, ein Aerogel, nadelförmig oder faserig ist.

7. Katalysierte Membran nach einem der vorstehenden Ansprüche, wobei die Gesamtbeladung des Primärmetalls des ersten katalytischen Materials weniger als 0,5 mg/cm² beträgt.

8. Katalysierte Membran nach einem der vorstehenden Ansprüche, wobei die Gesamtbeladung des Primärmetalls des ersten katalytischen Materials von 0,01 bis 0,4 mg/cm² beträgt.

9. Katalysierte Membran nach einem der vorstehenden Ansprüche, wobei das Gewichtsverhältnis des Primärmetalls des ersten katalytischen Materials zu dem zweiten katalytischen Material 1:99 bis 70:30 beträgt.

10. Katalysierte Membran nach einem der vorstehenden Ansprüche, wobei das Gewichtsverhältnis des Primärmetalls des ersten katalytischen Materials zu dem zweiten katalytischen Material 5:95 bis 40:60 beträgt.

11. Katalysierte Membran nach einem der vorstehenden Ansprüche, wobei die Katalysatorschicht ein protonenleitendes lonomer umfasst.

12. Verwendung einer katalysierten Membran nach einem der vorstehenden Ansprüche für die Elektrolyse von Wasser.

13. Membran-Elektroden-Anordnung, umfassend eine katalysierte Membran nach einem der Ansprüche 1 bis 12.

## Revendications

1. Membrane catalysée comprenant une membrane polymère solide conductrice de protons et une couche de catalyseur déposée sur une ou les deux faces de la membrane polymère solide conductrice de protons, la couche de catalyseur comprenant :
(i) un premier matériau catalytique, dans laquelle le premier matériau catalytique facilite une réaction d'oxydation de l'hydrogène ; et
(ii) un second matériau catalytique, dans laquelle le second matériau catalytique facilite une réaction de dégagement d'oxygène, dans laquelle le second matériau catalytique comprend de l'iridium ou de l'oxyde d'iridium et un ou plusieurs métaux M ou un oxyde de ceux-ci, dans laquelle M est choisi parmi le groupe constitué par les métaux de transition et Sn,
et
dans laquelle le premier matériau catalytique comprend un métal primaire qui est le platine, **caractérisé en ce que** le premier matériau catalytique est supporté par le second matériau catalytique.

2. Membrane catalysée selon la revendication 1, dans laquelle tout le premier matériau catalytique est supporté par le second matériau catalytique.

3. Membrane catalysée selon la revendication 1 ou la revendication 2, dans laquelle M est choisi parmi le groupe constitué par les métaux des groupes IVB, VB et VIB et Sn.

4. Membrane catalysée selon la revendication 3, dans laquelle M est choisi parmi le groupe constitué par Ti, Zr, Hf, Nb, Ta et Sn.

5. Membrane catalysée selon l'une quelconque des revendications précédentes, dans laquelle le second matériau catalytique a une surface d'au moins 10 m²/g.

6. Membrane catalysée selon l'une quelconque des revendications précédentes, dans laquelle le second matériau catalytique est une particule, un aérogel, aciculaire ou fibreux.

7. Membrane catalysée selon l'une quelconque des revendications précédentes, dans laquelle la charge totale du métal primaire du premier matériau catalytique est inférieure à 0,5 mg/cm².

8. Membrane catalysée selon l'une quelconque des revendications précédentes, dans laquelle la charge totale du métal primaire du premier matériau catalytique est comprise entre 0,01 et 0,4 mg/cm².

9. Membrane catalysée selon l'une quelconque des revendications précédentes, dans laquelle le rapport pondéral entre le métal primaire du premier matériau catalytique et le second matériau catalytique est compris entre 1:99 et 70:30.

10. Membrane catalysée selon l'une quelconque des revendications précédentes, dans laquelle le rapport pondéral entre le métal primaire du premier matériau catalytique et le second matériau catalytique est compris entre 5:95 et 40:60.

11. Membrane catalysée selon l'une quelconque des revendications précédentes, dans laquelle la couche catalytique comprend un ionomère conducteur de protons.

12. Utilisation d'une membrane catalysée selon une quelconque revendication précédente pour l'électrolyse de l'eau.

13. Ensemble membrane-électrode comprenant une membrane catalysée selon l'une quelconque des revendications 1 à 12.
